# NEUE EUROPÄISCHE PATENTSCHRIFT

(11) **EP 0 595 072 B2**
(45) Veröffentlichungstag und Bekanntmachung des Hinweises auf die Entscheidung über den Einspruch: **07.07.2004**
(45) Hinweis auf die Patenterteilung: 22.04.1998
(21) Anmeldenummer: 93116045.1
(22) Anmeldetag: 05.10.1993
(51) Int. Cl.: G01L 5/10, B21B 37/00

(54) **Umlenkmessrolle**
Turnover measuring roll
Rouleau mesureur de renvoi

(30) Priorität: 30.10.1992 DE 4236657
(43) Veröffentlichungstag der Anmeldung: 04.05.1994
(73) Patentinhaber: BETRIEBSFORSCHUNGSINSTITUT VDEh, INSTITUT FÜR ANGEWANDTE FORSCHUNG GmbH, D-40237 Düsseldorf (DE)
(72) Erfinder: Mücke, Gert, Dipl.-Ing., D-40721 Hilden (DE); Neuschütz, Eberhard, Dr.-Ing., D-40880 Ratingen (DE); Thiess, Helmut, Ing., D-41564 Kaarst (DE)
(74) Vertreter: König, Reimar, Dr.-Ing.

(56) Entgegenhaltungen:
- AT-B- 370 521
- DE-A- 2 994 723
- DE-A- 4 135 614
- DE-U- 6 922 747
- FR-A- 2 608 760

## Beschreibung

Die Erfindung bezieht sich auf eine Umlenkmeßrolle für die Ermittlung der Spannungsverteilung beim Walzen dünner Bänder, vor allem beim Kaltwalzen von dünnem Stahlblech entsprechend der im Oberbegriff des Patentanspruchs 1 bestehenden Art.

Weiterhin besteht die Erfindung bei einer Umlenkmeßrolle nach dem Oberbegriff des Patentanspruchs 2 in einer abgewandelten Art.

Umlenkmeßrollen dieser Art sind mit aus Ringscheiben zusammengesetzten Hohlwalzen nach der DE-PS 29 44 723 sowie nach der AT-PS 370 521 bekannt Die Meßergebnisse erfahren dabei eine Verfälschung als Folge von Durchbiegungen der Meßrolle. Um diesen Fehlern entgegenzuwirken, werden die einzelnen Ringscheiben differenziert gestaltet und zusammengesetzt, so daß die Durchbiegungszone quantitativ und qualitativ erfaßt wird. Gleichwohl treten Störkräfte und Störmomente auf, wie sie sich infolge elastischer Deformation des Walzkörpers im elastischen Verformungsbereich ergeben. Dies begrenzt die Verwendbarkeit des Meßsignals insbesondere für empfindliche Regelkreise. Soweit für die der Messung dienenden, in der Außenzone der Ringe angebrachten Sensoren äußere Abdeckungen vorgesehen sind, kommt hierdurch eine allseitige Verbindung zwischen den Sensoren bzw. Kraftmeßgebern und der Meßrolle zustande, so daß Kräfte und Momente zusätzlich eine Belastung der Kraftmeßgeber auslösen.

Um derarige Störungen zu beheben, bedarf es einer erheblichen Steigerung des meßtechnischen Aufwandes, wie z.B. der Anordung von kompensierenden Sensoren, die in einer Stellung von 180° peripher zu dem das Meßsignal erzeugenden Sensor versetzt angeordnet werden und mit dem letztgenannten Sensor zusammengeschaltet sind. Derartige Maßnahmen setzen einen erheblichen investitionsaufwand voraus.

Der Erfindung liegt die Aufgabe zugrunde, den beschriebenen Stand der Technik dahingehend weiterzuentwickeln, daß Störkräfte und Störmomente nicht durch Steigerung des meßtechnischen Aufwandes, sondern durch eine konstruktive Verbesserung der Meßrolle behebbar sind.

Diese Aufgabenstellung wird durch die Vorschläge der Patentansprüche gelöst, Bei dieser Anordnung gelangen die Kraftmeßgeber innerhalb ihrer Ausnehmung durch Belastung ihrer sich gegenüberliegenden Stirnflächen, die wiederum der Einspannung unterliegen, in ihrer Gesamtheit noch zu einer ausgesprochenden Steigerung der Meßgenauigkeit und damit zur Verbesserung der Ebenheit der gewalzten Stahlbleche. Durch den freibleibenden Ringspalt wird ausgeschlossen, daß seitliche Kräfte die Kraftmeßgeber beaufschlagen können. Dem steht nicht entgegen wenn eine Oberdeckung für die Kraftmeßgeber vorgesehen ist, an deren Außenwandung ein 0-Ring das Innere der Ausnehmung abdichtet. Daher empfiehlt es sich, eine derartige Ausführung nach den Patentansprüchen zu wählen, bei denen auf die Abdeckung Bezug genommen wird.

Weitere Ausgestaltungen der Erfindung sowie vorteilhafte Ausführungsformen derselben werden anhand der sich auf Beispiele beziehenden Zeichnungen verdeutlicht.

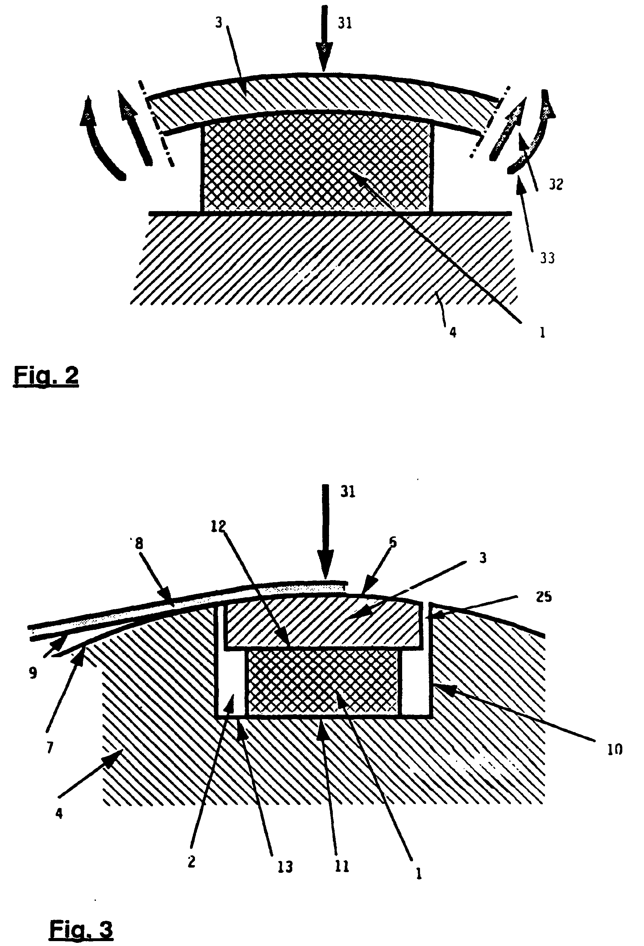

Die Zeichnungen der Figuren 1/1, 1/2, 1/3 und 2 zeigen den bekannt gewesenen Stand der Technik während sich die Figuren 3 bis 9 auf erfindungsgemäße Merkmale beziehen. Demnach gelten für die Figuren die nachfolgenden Bezeichnungen:

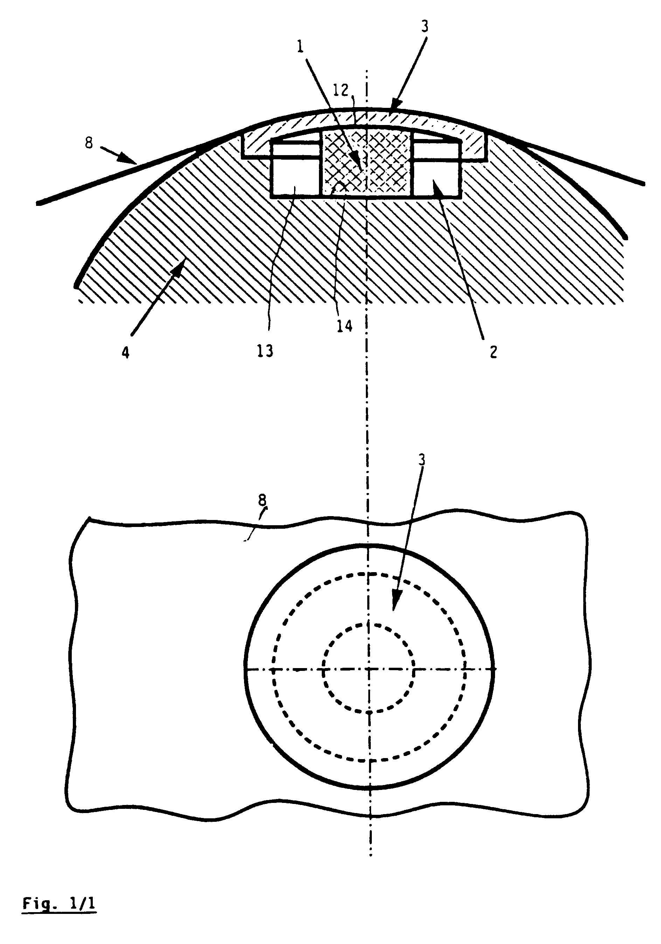

- Figur 1/1: die Kraftmeßgeber-Abdeckung mittels eines Deckels im Querschnitt und in Draufsicht;

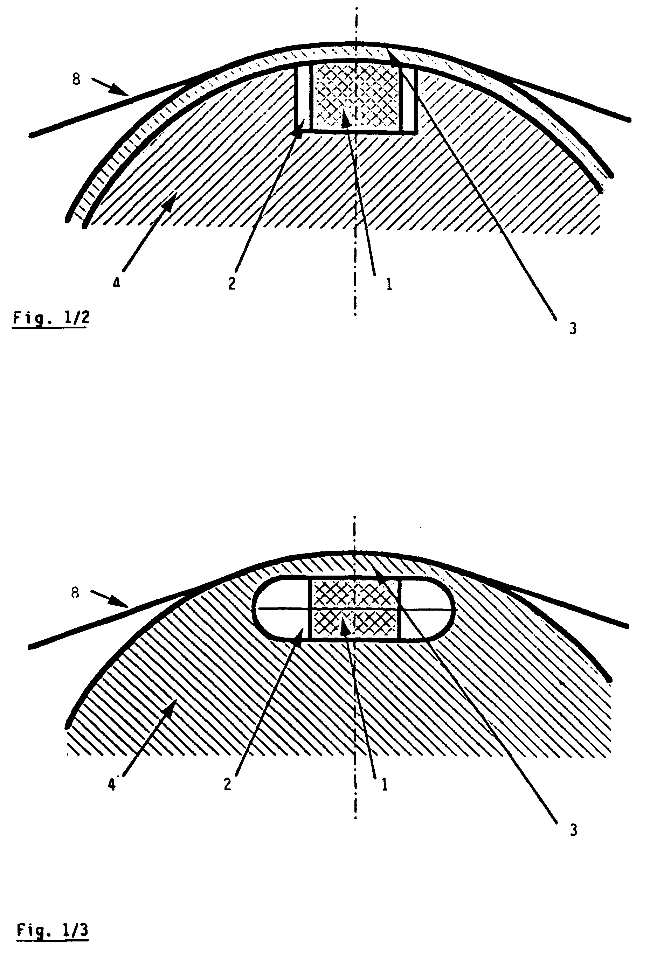

- Figur 1/2: die Einspannung des Kraftmeßgebers mittels eines Schrumpfringes;
- Figur 1/3: die Einspannung des Kraftmeßgebers mittels einer eingearbeiteten Membran;
- Figur 2: auf den Kraftmeßgeber einwirkende Kräfte; bei Einspannungen entsprechend Figuren 1/1, 1/2, 1/3,
- Figur 3: eine Anordnung der Kraftmeßgeber-Abdeckung in der Meßrolle;
- Figur 4: Bohrungen in der Meßrolle zur Aufnahme der Meßgeber und der Abdeckungen;
- Figur 5: die Verbindung der Kraftmeßgeber und deren Abdeckungen mittels an die Abdeckung angearbeitetem Bolzen;
- Figur 6: die Verbindung vom Kraftmeßgeber und seiner Abdeckung mittels Stehbolzen;
- Figur 7: die Verbindung des Kraftmeßgebers mit seiner Abdeckung mittels Schraubbolzen;
- Figur 8: einen Querschnitt durch die Meßrolle mit der Kraftmeßgeber-Abdeckung entsprechend Figur 7;
- Figur 9/1 und 9/2: Vorschläge der Erfindung für die Meßwertableitung.

Die Figuren 1/1, 1/2, 1/3 und 2 zeigen Entwicklungen, die für den Stand der Technik typisch geworden sind. Die Meßgeber 1 sind in Ausnehmungen 2 der Meßrolle 4 für die Umlenkung des Bandes 8 angeordnet. Bei Abdeckungen 3 dieser Art führt eine Drehung der Meßrollen 4 dazu, daß sinusförmige Störsignale kompensiert werden müssen, wenn vertretbare Meßergebnisse benötigt werden. Die schon erwähnte Zusammenschaltung und Versetzung um 180° sind bekannte Mittel hierfür.

Bei der nach Figur 3 erfindungsgemäßen Ausführungsform der Kraftmeßgeber-Abdeckung besteht ein allseitiger Spalt 25 zwischen der Wand 10 der Abdeckung 3 einerseits und dem Innern der Ausnehmung 2 im Rollenkörper 4 andererseits. Die Dicke des Spaltes 25 liegt zwischen 0,01 bis 0,05 mm. Es hat sich gezeigt, daß unter diesen Voraussetzungen bei der Spaltbreite keine Beschädigungen oder Markierungen auf der Oberfläche 9 des über die Meßrolle 4 laufenden Bandes 8 entstehen. Die Kraftmeßgeber 1 sind mit sich gegenüberliegenden Stirnflächen 11, 12 versehen. Mit den Stirnfläche 11 sind sie auf der Aufstandsfläche 13 verspannt.

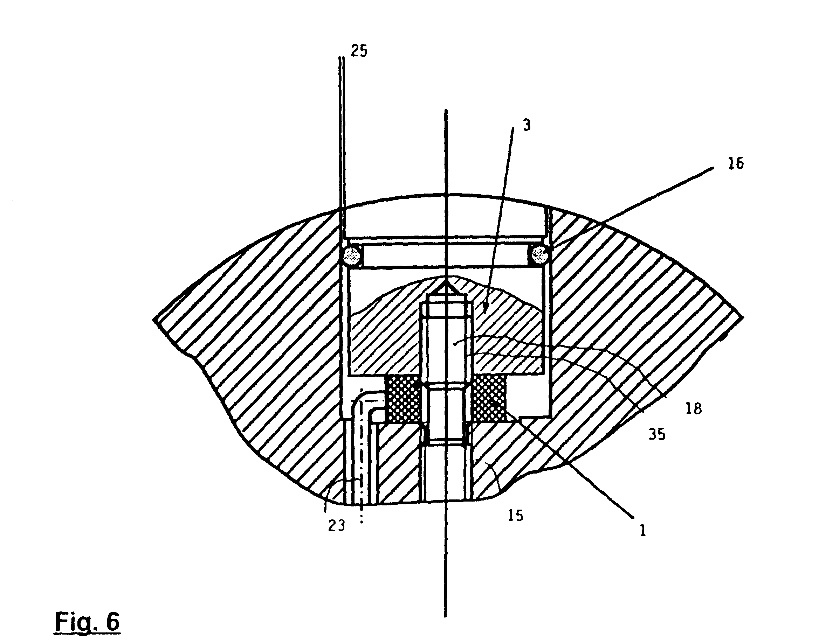

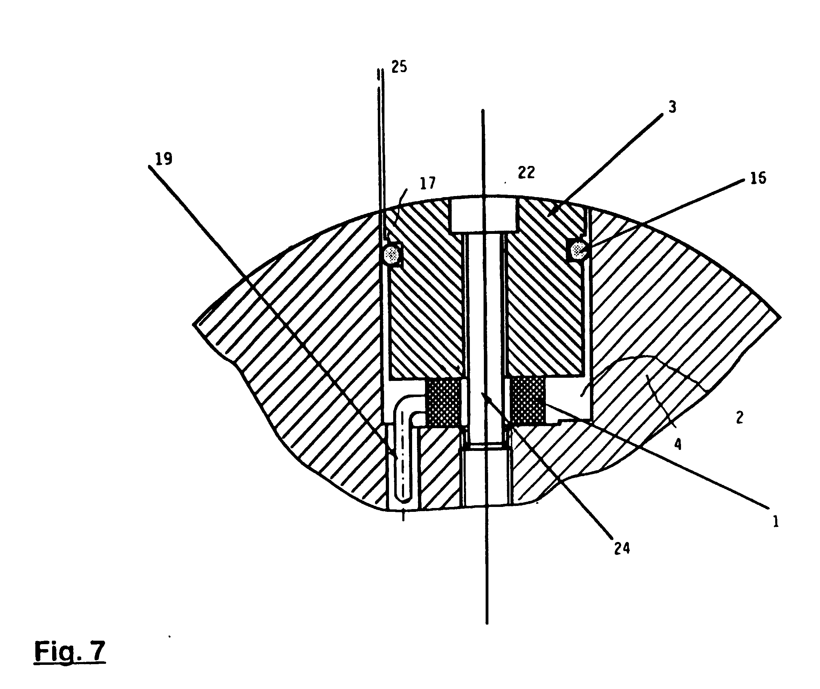

Für die Montage der erfindungsgemäßen Umlenkrollen ist die genaue Einstellung des Spaltmaßes zwischen dem Umfang der Abdeckung und der angrenzenden Wand 10 der Ausnehmungen 2 mit 0,01 bis 0,05 mm möglichst genau einzuhalten. Hierfür sieht die Erfindung vor, daß die Abdeckung 3 vor dem Einbringen in die Meßrollenausnehmung 2 erwärmt wird, so daß das Spaltmaß beim Spannen der Schraubbolzen nach beispielsweise Fig. 6 oder Figur 7 annähernd den Wert 0 aufweist. Die Erwärmungstemperatur hegt dabei etwa bei 100°C. Beim Abkühlen der Kraftmeßgeber-Abdeckung 3 stellt sich sodann ein gleichmäßig konzentrischer Spalt 25 ein.

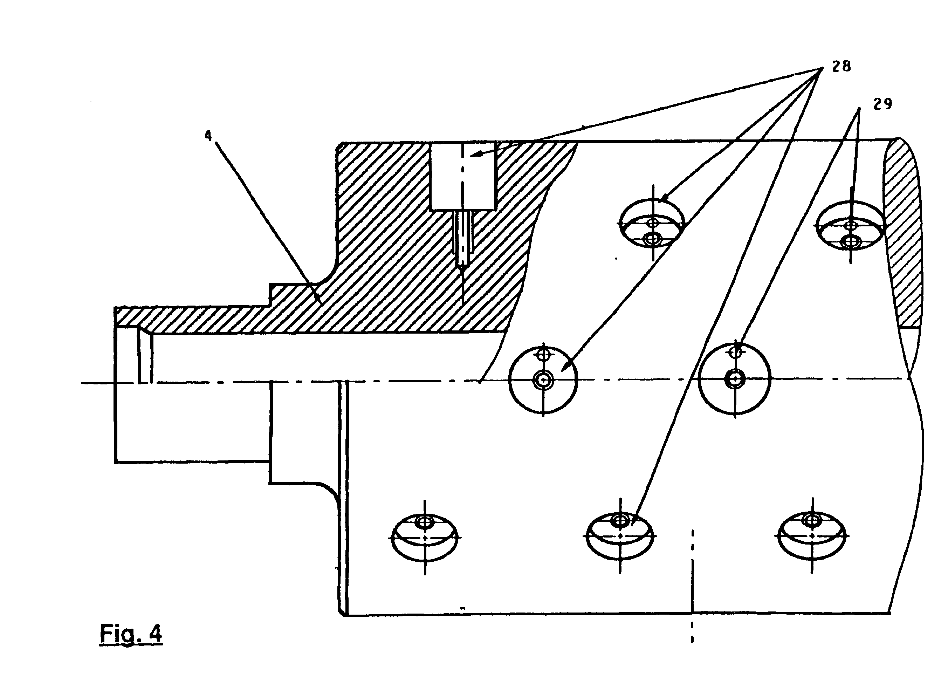

Die Verteilung der einzelnen Meßstellen 5 zeigt Figur 4. Die Meßstellen 5 sind nach Figur 4 Zylinderbohrungen 28, von denen jeweils Radialbohrungen 29 für die Ableitung der Meßkabel vurgesehen sind.

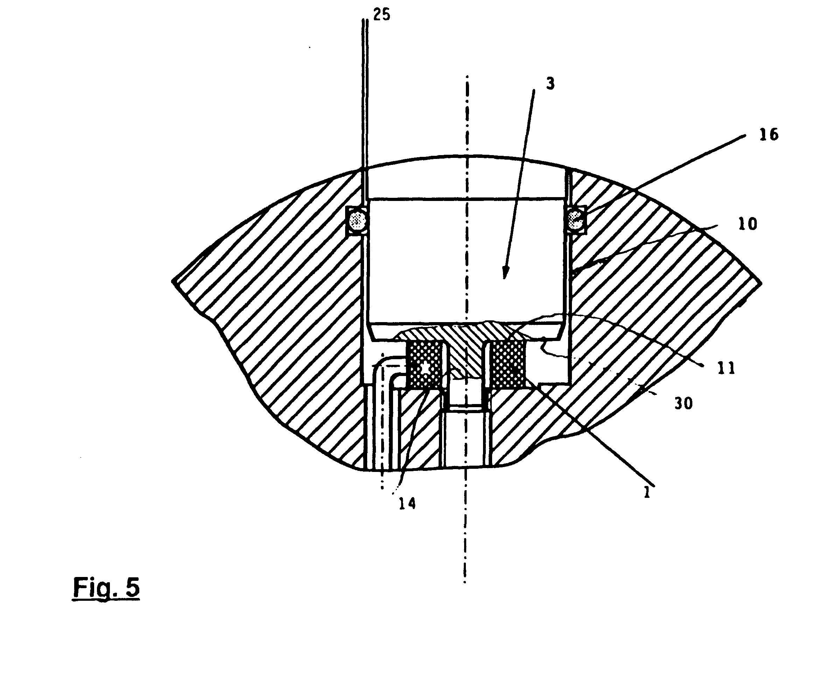

Nach den Figuren 4 und 5 erfahren die Meßrollenbohrungen, die Kraftmeßgeber 1 und die Abdeckungen eine erhebliche Vereinfachung dadurch, daß diese kreisförmig ausgeführt werden.

Bei der Ausführung nach Figur 5 liegt die Kraftmeßgeber-Abdeckung mit ihrer stirnseitigen Fläche 30 an der entsprechenden Stimfläche 11 des Kraftmeßgebers 1 an. Das Spannmittel 14 ist an die Abdeckungen 3 angearbeitet. Die Verspannung erfolgt wie bei Figur 6 über eine nicht dargestellte Schlüsselfläche an der Abdeckung. Dank einer ausreichenden achsialen Erstreckung der Abdeckung 3 und damit einer stopfenähnlichen Ausbildung derselben kommt es zu einer Führung an der Innenwand 10 der Meßstellenbohrung. Eine Abdichtung gegenüber dem Eindringen von Fremdstoffen gewährleistet ein O-Ring.

Die Ausführungsform nach Figur 6 zeigt weiterhin eine durch den Kraftmeßgeber 1 führende, versenkte Durchgangsbohrung 15, mit einer durch die Abdeckung 3 des Kraftmeßgebers 1 nach außen verdeckten Gewindebohrung 36. Dadurch besteht die Möglichkeit, unter Einhaltung der Spaltweite von 0,01 und 0,05 mm die Abdeckung 3 mit Hilfe einer nicht dargestellten Schlüsselflache auf einen zentral vorgesehenen Stehbolzen 18 aufzuschrauben.

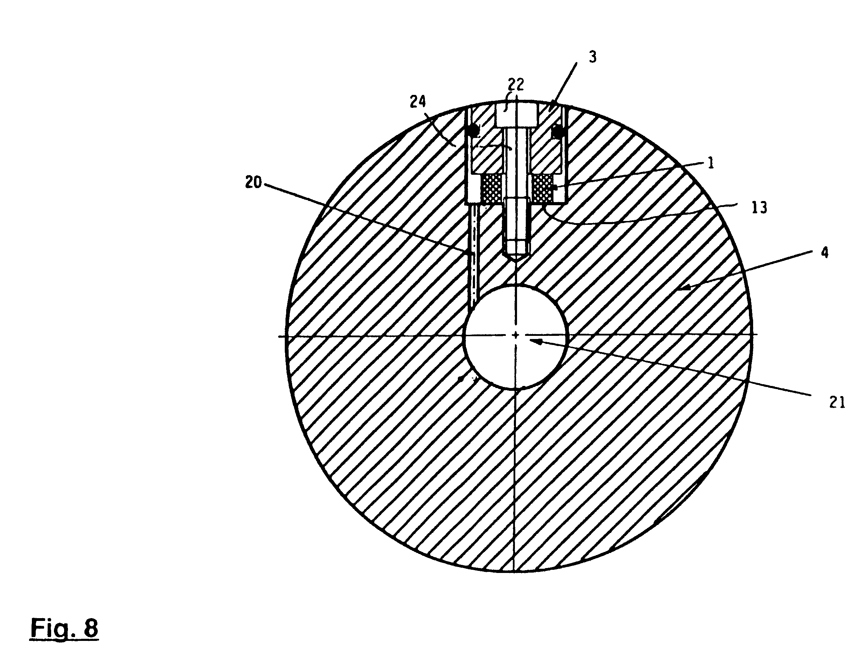

Figur 8 veranschaulicht eine einfache Meßwertableitung mittels einer Meßkabelbohrung 20, die von der Aufstandsfläche 13 ausgehend in die Zentralbohrung 21 einmündet. Der Kraftmeßgeber ist ringförmig gestaltet und wird vom Walzenkopf 22 der Spannschraube 24 zentral durchsetzt. Die Ausführungsform nach Figur 7 veranschaulicht die Abdichtung der Kraftmeßgeber-Abdeckung 3 gegen das Innere der Ausnehmung 2. Kennzeichnend ist, daß auf diese Weise ein besonders enger Spalt 25 besteht, der die Abdichtung gegenüber der Ausnehmung 2 gewährleistet.

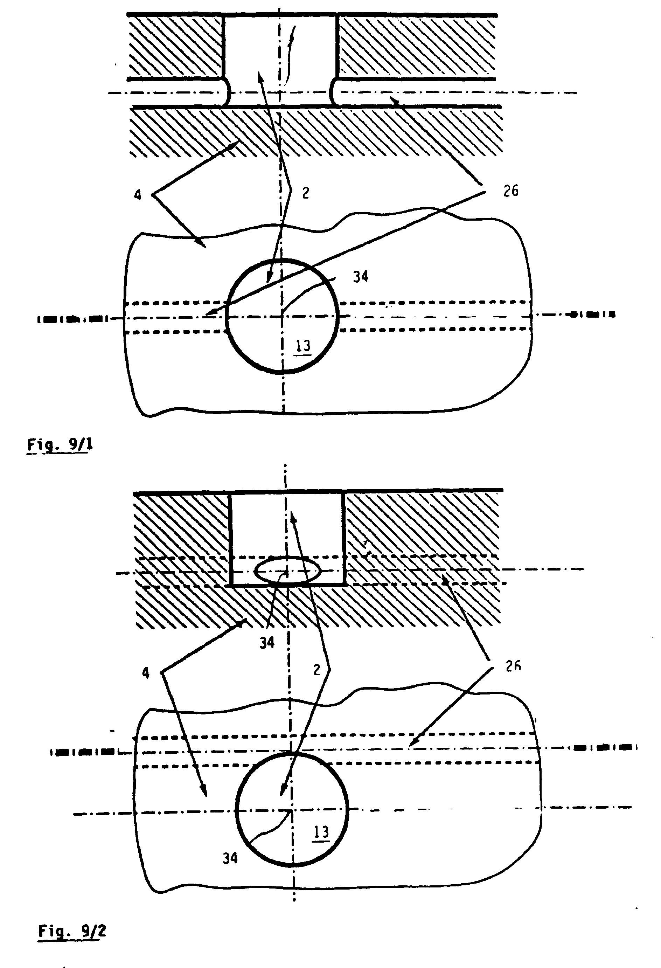

Die Achsialbohrungen 26 für die Führung der Meßleitungen sind in Figur 9/1 und 9/2 anschaulich dargestellt, so wie sie sich gemäß Figur 9/1 zentriert zu der Mitte der Ausnehmungen 2 und bei Figur 9/2 exzentrisch zu der Mitte der Ausnehmungen 2 ergeben. Es ist vorteilhaft, für die Meßleitung die Kombination von Radial 29- und Achsialbohrungen 26 für die Herstellung der Kabelkanäle zu verwenden.

## Patentansprüche

1. Umlenkmeßrolle für die Ermittlung der Spannungsverteilung beim Walzen dünner Bänder (8), vor allem beim Kaltwalzen von dünnem Stahlblech mit einer zylindrischen Meßrolle (4), in deren Umfang Meßstellen (5) angeordnet sind, die mit Kraftmeßgebern (1) bestückt sind, welche sich gegenüberliegende Stirnflächen aufweisen und mit der einen von den Stirnflächen am Boden der Ausnehmungen (2) in zur Rolle radialer Richtung auf der Rollenachse aufgespannt sind und der Beaufschlagung der Meßrollenbelastung beim Betrieb derselben unterliegen und entsprechend ihrer Anordnung den Spannungsverlauf der Meßrolle (4) anzeigen, wobei die Kraftmeßgeber (1) eine Abdeckung (3) aufweisen, **dadurch gekennzeichnet, daß** die Anordnung der Kraftmeßgeber (1) in den Ausnehmungen (2) auf Aufspannflächen der letzteren in Radialrichtung bzgl. der Achse der Meβrolle Verwirklicht ist, wobei sich ein durchgehend freier, ringförmiges Spatt (25) zwischen Außenflächen der Kraftmeßgebers (1) und allen zur Innenfläche der Ausnehmung (2) gerichteten Außenflächen seines Abdeckung (3) einerseits sowie des Innenfläche der Ausnehmung (2) andererseits befindet, und im Betriebszustand ein Kontakt zwischen der Meßrolle (4) sowie den Abdeckungen (3) der Kraftmeßgeber (1) und dem zu prüfenden Band (8) besteht.

2. Umlenkmeßrolle für die Ermittlung der Spannungsverteilung beim Walzen dünner Bänder (8), vor allem beim Kaltwalzen von dünnem Stahlblech mit einer zylindrischen Meßrolle (4), in deren Umfang Meßstellen (5) angeordnet sind, die mit Kraftmeßgebern (1) bestückt sind, welche sich gegenüberliegende Stirnflächen aufweisen und mit der einen von den Stirnflächen am Boden der Ausnehmungen (2) in zur Rolle radialer Richtung auf der Rollenachse aufgespannt sind und der Beaufschlagung der Meßrollenbelastung beim Betrieb derselben unterliegen und entsprechend ihrer Anordnung den Spannungsverlauf der Meßrolle (4) anzeigen, wobei die Kraftmeßgeber (1) eine Abdeckung (3) aufweisen, **dadurch gekennzeichnet, daß** für die Kraftmeßgeber (1) Ausnehmungen (2) bestehen, an deren Bodenfläche die Kraftmeßgeber (1) aufgespannt sind, während ihre Außenflächen unmittelbar an der Oberfläche des zu prüfenden Bandes (8) anliegen und wobei die Abdeckungen (3) im Betriebszustand mit ihren Oberflächen (6) und die Meßrollenoberfläche (7) unmittelbar an der Oberfläche (9) des zu prüfenden Bandes anliegen, wobei sich ein durchgehend freier, ringförmiges Spatt (25) zwischen Außenflächen der Kraftmeßgebers (1) und allen zur Innenfläche der Ausnehmung (2) gerichteten Außenflächen seines Abdeckung (3) einerseits sowie des Innenfläche der Ausnehmung (2) andererseits befindet, und im Betriebszustand ein Kontakt zwischen der Meßrolle (4) sowie den Abdeckungen (3) der Kraftmeßgeber (1) und dem zu prüfenden Band (8) besteht.

3. Umlenkmeßrolle nach den Ansprüchen 1 und 2,
**dadurch gekennzeichnet,**
**daß** die übertragenden Flächen der Abdeckung und der Meßrolle ein gemeinschaftliches Oberflächenrelief besitzen, indem beide Teile eine gemeinschaftliche Oberflächenbearbeitung erfahren. und dessen allseitiger Spalt (25) zwischen den Abdeckungen und dem Innem der Ausnehmungen besteht.

4. Umlenkmeßrolle nach den Ansprüchen 1 bis 3,
**dadurch gekennzeichnet,**
**daß** die Werkstoffe für die Meßrolle (4) sowie für die Abdeckung (3) des darin angeordneten Kraftmeßgebers (1) unter dem Gesichtspunkt gleicher Festigkeit, gleicher Elastizität, gleichen Verschleißwiderstandes und gleicher Wärmeausdehnung ausgewählt sind.

5. Umlenkmeßrolle nach Anspruch 4,
**dadurch gekennzeichnet,**
**daß** zur Führung der Abdeckung (3) für letztere die Form eines Stopfens besteht, und daß für die Passung der zur Führung vorgesehenen Teile wenigstens ein Teil mit einer Passung von 0,01 mm bis 0,05 mm ausgebildet ist.

6. Umlenkmeßrolle nach den Ansprüchen 1 bis 5,
**dadurch gekennzeichnet,**
**daß** die Kraftmeßgeber (1) und die sie aufnehmenden Ausnehmungen (2) mit kreisförmigem Querschnitt ausgeführt sind.

7. Umlenkmeßrolle nach den Ansprüchen 1 bis 6,
**dadurch gekennzeichnet,**
**daß** die Kraftmeßgeber (1) als Ring ausgebildet sind.

8. Umlenkmeßrolle nach den Ansprüchen 1 bis 7,
**dadurch gekennzeichnet,**
**daß** zur Abdichtung der Kraftmeßgeber (1) in der Ausnehmung (2) in deren Wandung eine umlaufende Nut für die Aufnahme eines O-Ringes (16) besteht.

9. Umlenkmeßrolle nach den Ansprüchen 1 bis 8,
**dadurch gekennzeichnet,**
**daß** die Abdeckung (3) in der Höhenlage eine umlaufende Ringnut für die Aufnahme des O-Ringes (16) aufweist.

10. Umlenkmeßrolle nach den Ansprüchen 1 bis 9,
**dadurch gekennzeichnet,**
**daß** die Abdeckung (3) mittels eines zentralen Stehbolzens (18), der einen ringförmigen Kraftmeßgeber (1) durchsetzt, wenigstens auf der Aufstandsfläche (13) der Ausnehmung (2) der Umlenkmeßrolle (4) verspannt ist.

11. Umlenkmeßrolle nach den Ansprüchen 1 bis 10,
**dadurch gekennzeichnet,**
**daß** Schraubbolzen verwendet werden, die den Kraftmeßgeber (1) zentral durchsetzen und ihn auf der Aufstandsfläche (13) verspannen.

12. Umlenkmeßrolle nach den Ansprüchen 1 bis 11,
**dadurch gekennzeichnet,**
**daß** eine Meßwertzuleitung über einen vom Boden der Aufstandsfläche (13) ausgehenden Kanal herausgeführt ist, der in eine zentrale Längsbohrung der Meßrolle (4) mündet.

13. Umlenkmeßrolle nach den Ansprüchen 1 bis 12,
**dadurch gekennzeichnet,**
**daß** als Kraftmeßgeber (1) Piezzo-Quarze Verwendung finden.

14. Umlenkmeßrolle nach den Ansprüchen 1 bis 13,
**dadurch gekennzeichnet,**
**daß** für die Meßleitungen (23) in der Meßrolle (4) Axialbohrungen bestehen.

15. Umlenkmeßrolle nach den Ansprüchen 1 bis 14,
**dadurch gekennzeichnet,**
**daß** jeweils mehrere Meßleitungen (23) zu einer Gruppe zusammengefaßt und einer Axialbohrung zugeordnet sind.

16. Umlenkmeßrolle nach den Ansprüchen 1 bis 15,
**dadurch gekennzeichnet,**
**daß** die in den axialen Bohrungen bestehenden Kabelkanäle zur Aufnahme von in radialer Richtung von den Aufstandsflächen (13) der Ausnehmung (2) ausgehenden, abzweigenden Meßkabeln (20) ausgeführt sind.

17. Umlenkmeßrolle nach den Ansprücken 1 bis 16,
**dadurch gekennzeichnet,**
**daß** die Abdeckung (3) mit der Maßgabe ausgebildet wird, daß bei ihrer Erwärmung auf etwa 100°C bei einem Passungssitz zwischen 0,01 und 0,05 mm eine Zentrierung in der Ausnehmung (2) erfolgt.

## Claims

1. Deflecting roll for determination of the stress distribution when rolling thin strips (8), above all when cold rolling thin steel sheet, having a cylindrical measuring roll (4) in the circumference of which there are arranged measuring points (5) which are fitted with force transmitters (1) which have end faces at opposite ends and are clamped by one of said end faces at the bottom of the recesses (2) to the roll axis in the direction radial to the roll axis and are subjected to the pressure of the load on the measuring roll while this is in operation and indicate the stress pattern of the measuring roll (4) according to their arrangement, said force transmitters (1) having a cover (3),
**characterised in that**
the arrangement of the force transmitters (1) in the recesses (2) is realised on clamping faces of said recesses in a direction radial to the axis of the measuring roll, there being a continuously free annular gap (25) between outer faces of the force transmitter (1) and, on the one hand, all outer faces of its cover (3) directed towards the inner face of the recess (2), and on the other hand the inner face of the recess (2), and in the operating state there is a contact between the measurement roll (4), and the covers (3) of the force transmitters (1), and the strip (8) to be tested.

2. Deflecting roll for determination of the stress distribution when rolling thin strips (8), above all when cold rolling thin steel sheet, having a cylindrical measuring roll (4) in the circumference of which there are arranged measuring points (5) which are fitted with force transmitters (1) which have end faces at opposite ends and are clamped by one of said end faces at the bottom of the recesses (2) to the roll axis in the direction radial to the roll axis and are subjected to the pressure of the load on the measuring roll while this is in operation and indicate the stress pattern of the measuring roll (4) according to their arrangement, said force transmitters (1) having a cover (3),
**characterised in that**
for the force transmitters (1) there are provided recesses (2) to the bottom faces of which the force transmitters (1) are clamped, while their outer faces are in direct contact with the surface of the strip (8) to be tested, and in the operating state the covers (3) having their surfaces (6) in contact with the surface (9) of the strip to be tested and the surface (7) of the measuring roll being in direct contact therewith, wherein there is a continuously free annular gap (25) between outer faces of the force transmitter (1) and, on the one hand, all outer faces of its cover (3) directed towards the inner face of the recess (2), and on the other hand the inner face of the recess (2), and in the operating state there is a contact between the measurement roll (4), and the covers (3) of the force transmitters (1), and the strip (8) to be tested.

3. Deflecting roll according to claim 1 or claim 2,
**characterised in that**
the transmitting faces of the cover and of the measurinq roll have a common surface relief, with both parts undergoing a common surface machining and the all-round gap (25) existing between the covers and the interiors of the recesses.

4. Deflecting roll according to any of claims 1 to 3,
**characterised in that**
the materials of the measuring roll (4) and of the cover (3) of the force transmitter (1 ) disposed therein are selected from the point of view of the same strength, the same elasticity, the same wear resistance and the same thermal expansion.

5. Deflecting roll according to claim 4,
**characterised in that**
for guidance of the cover (3), said cover is in the form of a stopper, and that for the fit of the parts provided for the guidance at least one part is formed with a fit of 0.01 mm to 0.05 mm.

6. Deflection roll according to any of claims 1 to 5,
**characterised in that**
the force transmitters (1) and the recesses (2) receiving them are made with a circular cross-section.

7. Deflection roll according to any of claims 1 to 6,
**characterised in that**
the force transmitters (1) are in annular form.

8. Deflection roll according to any of claims 1 to 7,
**characterised in that**
for sealing of the force transmitter (1) in the recess (2) a circumferential groove is provided in its wall to receive an O-ring (16).

9. Deflection roll according to any of claims 1 to 8,
**characterised in that**
the cover (3) is provided in an elevated position with a circumferential annular groove to receive the O-ring (16).

10. Deflection roll according to any of claims 1 to 4,
**characterised in that**
the cover (3) is clamped, at least on the supporting face (13) of the recess (2) in the deflection roll (4), by means of a central stud bolt (19) which passes through an annular force transmitter (1).

11. Deflection roll according to any of claims 1 to 10, **characterised in that** screws are used which pass centrally through the force transmitter and clamp it on the supporting face (13).

12. Deflection roll according to any of claims 1 to 11,
**characterised in that**
a data lead is led out through a passage which runs out from the base of the supporting face (13) and opens into a central longitudinal bore in the measuring roll (4).

13. Deflection roll according to any of claims 1 to 12,
**characterised in that**
piezoelectric quartz crystals are used as force transmitters (1).

14. Deflection roll according to any of claims 1 to 13,
**characterised in that**
axial bores are provided in the measuring roll(4) for the data leads (23).

15. Deflection roll according to any of claims 1 to 14,
**characterised in that**
several respective data leads (23) are collected into a group and associated with an axial bore.

16. Deflection roll according to any of claims 1 to 15,
**characterised in that**
the cable passages provided in the axial bores are made in such a way as to receive branching data cables (20) running in a radial direction from the supporting faces (13) of the recess (2).

17. Deflection roll according to any of claims 1 to 16,
**characterised in that**
the cover (3) is formed so as to meet the condition that on heating it up to about 100°C, with a seating fit between 0.01 mm and 0.05 mm., centring in the recess (2) occurs.

## Revendications

1. Rouleau mesureur de renvoi pour le calcul de la distribution des tensions lors du laminage de bandes minces (8), surtout lors du laminage à froid de tôle d'acier mince avec un rouleau mesureur cylindrique (4), sur la circonférence duquel sont placés des points de mesure (5) munis de transducteurs de mesure de force (1), lesquels présentent des faces terminales s'opposant, et qui sont montés sur le rouleau sur le fond des évidements (2) avec l'une des faces terminales dans la direction radiale à l'axe du rouleau, et qui sont soumis à la contrainte de la charge du rouleau mesureur lors du fonctionnement de celui-ci, et indiquent la courbe de tension du rouleau mesureur (4) en fonction de leur disposition, les transducteurs de mesure de force (1) présentant un chapeau (3), **caractérisé en ce que** la disposition des transducteurs de mesure de force (1) dans les évidements (2) est réalisée sur des surfaces de contraintes de ces derniers en direction radiale par rapport à l'axe du rouleau mesureur, une fente (25) continue en forme d'anneau se trouvant librement entre des surfaces extérieures du transducteur de mesure de force (1) dirigées vers la surface intérieure de l'évidemment (2) et toutes les surfaces extérieures de son chapeau (3), d'une part et, d'autre part, de la surface intérieure de l'évidemment (2), et **en ce qu'**il existe, en position de service, un contact entre le rouleau mesureur (4) ainsi que les chapeaux (3) des transducteurs de mesure de force et la bande (8) à contrôler.

2. Rouleau mesureur de renvoi pour le calcul de la distribution des tensions lors du laminage de bandes minces (8), surtout lors du laminage à froid de tôle d'acier mince avec un rouleau mesureur cylindrique (4), sur la circonférence duquel sont placés des points de mesure (5) munis de transducteurs de mesure de force (1), lesquels présentent des faces terminales s'opposant, et qui sont montés dans la direction radiale du rouleau sur l'axe du rouleau sur le fond des évidements (2) avec l'une des faces terminales, dans la direction radiale à l'axe du rouleau, et qui sont soumis à la contrainte de la charge du rouleau mesureur lors du fonctionnement de celui-ci, et indiquent la courbe de tension du rouleau mesureur (4) en fonction de leur disposition, les transducteurs de mesure de force (1) présentant un chapeau (3), **caractérisé en ce que** des évidements (2) sont réalisés pour les transducteurs de mesure de force (1) sur la surface desquels les transducteurs de mesure de force (1) sont fixés, alors que leurs surfaces extérieures sont directement adjacentes à la surface de la bande (8) à contrôler, les surfaces (6) des chapeaux (3), à l'état de service, et la surface du rouleau mesureur (7) étant directement adjacentes à la surface (9) de la bande (8) à contrôler, une fente (25) continue en forme d'anneau se trouvant librement entre des surfaces extérieures du transducteur de mesure de force (1) dirigées vers la surface intérieure de l'évidemment (2) et toutes les surfaces extérieures de son chapeau (3), d'une part et, d'autre part, de la surface intérieure de l'évidemment (2), et **en ce qu'**il existe, en position de service, un contact entre le rouleau mesureur (4) ainsi que les chapeaux (3) des transducteurs de mesure de force et la bande (8) à contrôler.

3. Rouleau mesureur de renvoi selon les revendications 1 et 2, **caractérisé en ce que** les surfaces de transfert du chapeau et du rouleau mesureur possèdent un relief de surface commun, dans lequel les deux pièces subissent un traitement commun de surface et dont la fente polydirectionnelle (25) est réalisée entre les chapeaux et l'intérieur des évidements.

4. Rouleau mesureur de renvoi selon les revendications 1 à 3, **caractérisé en ce que** les matériaux pour le rouleau mesureur (4) ainsi que pour le chapeau (3) du transducteur de mesure de force (1) placé à l'intérieur du rouleau sont sélectionnés selon le même critère de résistance, d'élasticité, de résistance à l'usure et de dilatation thermique.

5. Rouleau mesureur de renvoi selon la revendication 4, **caractérisé en ce que** pour le guidage du chapeau (3), ce dernier a la forme d'un bouchon, et que pour l'ajustement des pièces prévues pour le guidage au moins une pièce est formée avec un ajustement de 0,01 mm à 0,05mm.

6. Rouleau mesureur de renvoi selon les revendications 1 à 5, **caractérisé en ce que** les transducteurs de mesure de force (1) et les évidements (2) qui les logent sont exécutés avec une section circulaire.

7. Rouleau mesureur de renvoi selon les revendications 1 à 6, **caractérisé en ce que** les transducteurs de mesure de force (1) ) sont formés comme anneau.

8. Rouleau mesureur de renvoi selon les revendications 1 à 7, **caractérisé en ce que** pour l'étanchéité des transducteurs de mesure de force (1), on a réalisé une rainure circulaire dans la paroi de l'évidement (2) pour loger un joint torique (16).

9. Rouleau mesureur de renvoi selon les revendications 1 à 8, **caractérisé en ce que** le chapeau (3) présente dans la partie supérieure une rainure annulaire pour loger le joint torique (16).

10. Rouleau mesureur de renvoi selon les revendications 1 à 9, **caractérisé en ce que** le chapeau (3) est bloqué au moyen d'un boulon fileté central (19) qui traverse un transducteur de mesure de force en forme d'anneau (1), au moins sur la surface de contact (13) de l'évidement (2) du rouleau mesureur de renvoi (4).

11. Rouleau mesureur de renvoi selon les revendications 1 à 10, **caractérisé en ce que des** boulons filetés sont utilisés, lesquels traversent centralement le transducteur de mesure de force (1) ) et le bloquent sur la surface de contact (13).

12. Rouleau mesureur de renvoi selon les revendications 1 à 11, **caractérisé en ce qu'**une conduite d'alimentation de la valeur mesurée est conduite via un canal provenant du sol de la surface de contact (13), canal qui débouche dans un trou longitudinal central du rouleau mesureur (4).

13. Rouleau mesureur de renvoi selon les revendications 1 à 12, **caractérisé en ce que** des quartz piézoélectriques sont utilisés comme transducteurs de mesure de force (1).

14. Rouleau mesureur de renvoi selon les revendications 1 à 13, **caractérisé en ce qu'**il existe des trous axiaux pour les lignes de mesure (23) dans le rouleau mesureur (4).

15. Rouleau mesureur de renvoi selon les revendications 1 à 14, **caractérisé en ce que** plusieurs lignes de mesure (23) sont respectivement rassemblées en un groupe et sont attribuées à un trou axial.

16. Rouleau mesureur de renvoi selon les revendications 1 à 15, **caractérisé en ce que** les canaux de câbles existant dans les trous axiaux sont exécutés pour le logement de câbles de mesure (20) provenant et bifurquant en direction radiale des surfaces de contacts (13) de l'évidement (2).

17. Rouleau mesureur de renvoi selon les revendications 1 à 16, **caractérisé en ce que** le chapeau (3) est formé avec la caractéristique que lors de son échauffement à environ 100° C, avec un ajustement de 0,01mm à 0,05 mm, il en résulte un centrage dans l'évidement (2).
